# EUROPEAN PATENT APPLICATION

(11) **EP 2 541 430 A2**
(43) Date of publication of application: **02.01.2013**
(21) Application number: 11193197.8
(22) Date of filing: 22.12.2006
(51) Int. Cl.: G06F 15/16, G06F 21/00, H04L 29/06, H04N 21/8545, H04N 21/4788, H04N 21/462, H04L 29/08

(54) **Social network-enabled interactive media player**

(30) Priority: 22.12.2005 US 752814 P; 31.08.2006 US 824199 P
(62) Divisional of application: 06848094.6
(71) Applicant: Catalog.Com, Inc., Oklahoma City OK 73134 (US)
(72) Inventor: Crull, Robert Wayne, Edmond, OK 73034 (US); Miller, Bill Cody, Arlington, TX 76016 (US); Kenney, Andrew Blinn, Oklahoma City, OK 73134 (US); Martin, Thad Thomas, Norman, OK 73072 (US)
(74) Representative: Peterreins, Frank

(57) **Abstract**

Systems and methods for online social networking may include an interactive media player. The interactive media player may exhibit media and allow interaction between users and/or users and administrators.

## Description

The present application claims the benefit of U.S. Provisional Patent Application Serial No. 60/752,814, entitled "SYSTEM AND METHOD FOR CROSS-DOMAIN SOCIAL NETWORKING" filed on December 22, 2005, and to U.S. Provisional Patent Application Serial No. 60/824,199, entitled "SOCIAL NETWORK-ENABLED INTERACTIVE MEDIA PLAYER" filed on August 31, 2006, the entire contents of which are hereby incorporated by reference.

### TECHNICAL FIELD

This invention relates to online networks, and more particularly to an online social network that includes an interactive media player.

### BACKGROUND

Social networking refers to the social structure among individuals and/or organizations, explaining ways in which they connect and interact through various social familiarities. Research in a variety of academic areas has demonstrated the critical role social networks play on various levels (personal to international) in developing norms and behaviors of individuals within the social network.

In the age of the Internet, social networking also refers to a category of online applications designed to connect individuals (*e.g*., friends, people with common interests, business partners, potential mates) using virtual communities. Media sites on the Internet also distribute online music, video, and entertainment.

### SUMMARY

Systems and processes for online social networking may create a mechanism for the distribution of media within a social network. A social network may include one or more websites that include interactive media players. Social networks may be utilized to distribute media, promote media, and encourage discussion and interaction centered on media. The interactive media player may create a mechanism for the distribution of media within a social network. The interactive media player may also facilitate media promotion since feedback for new media can be obtained quickly and/or users can communicate, foster discussion, and request exhibition of new media while interacting with other users in the social network.

A process for social networking may include receiving a request from a user for access to a first website coupled to the social network; receiving a request from the user for access to a media exhibition on an interactive media player on the first website from the user; presenting the media to the user on the interactive media player; and allowing the user to interact on the interactive media player with other users. The first website may be coupled to an authentication system. Whether a user is logged on to the authentication system may be automatically determined.

In some implementations, the media may be presented to the user, if the user is logged on to the authentication system and/or if the user is not logged on to the authentication system. A user that is logged on to the authentication system may be allowed to interact with the other users. In one implementation, a user that is not logged on to the authentication system may be inhibited from interacting with other users.

The interactive media player may include more than one channel. Different media may be exhibited on different channels. The user may be allowed to interact on the interactive media player with other users on the same channel and/or with users viewing different media on different channels.

In some implementations, a system may include a processor and a memory coupled to the processor, where the memory stores program instructions operable to perform a process of the social networking system. In some implementations, the process may be performed by software that includes operable computer-readable instructions.

### DESCRIPTION OF DRAWINGS

FIG. 1 is an illustration of an example of a social network.
FIG. 2 is another illustration of an example social network.
FIG. 3 is an illustration of an example interaction between a user and an interactive media player in a social network.
FIG. 4 is a flowchart of an example process for accessing the interactive media player in a social network.
FIG. 5 is an example of a screen shot of an interactive media player in a social network.
FIG. 6 is an illustration of interactive prompts on an example interactive media player.
FIG. 7 is a illustration of an example processing for accessing and interacting with the interactive media player

Like reference symbols in the various drawings indicate like elements.

### DETAILED DESCRIPTION

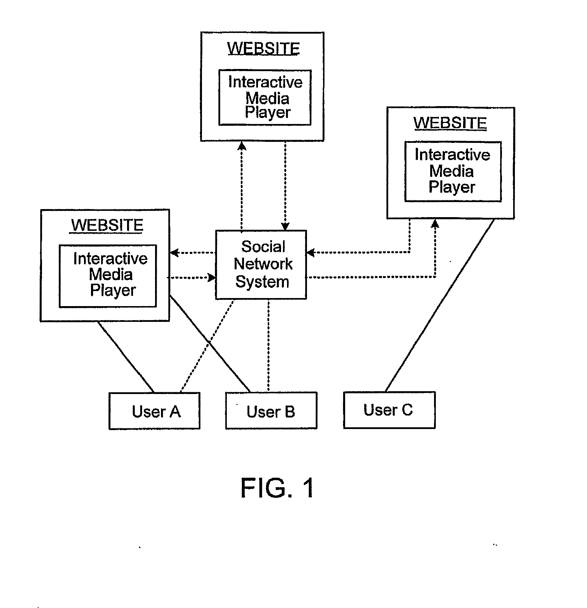

FIG. 1 is an illustration of an example social network with interactive media players. An online social network may be an association of users. The social network may include a plurality of nodes, each representing a common feature among users, such as, but not limited to, interest, goal, background, and/or place of residence. For example, nodes may represent hobbies, fans of sports or teams, college alumni, viewers or listeners in a regional location, or other groups of members.

The social network may include websites on different domains. The different domains may be linked via an authentication system. The authentication system may allow a user to centrally log on to the social network. An example of an authentication system is described in additional detail in U.S. Patent Application No. 11/615,806, entitled "SYSTEM AND METHOD FOR CROSS-DOMAIN SOCIAL NETWORKING," filed on December 22, 2006, the contents of which are hereby incorporated by reference. In one implementation, the user may log on to a first website coupled to the authentication system and then visit a second website also coupled to the authentication system without having to re-enter log on information. The authentication system may allow a user to seamlessly visit a number of websites linked to the authentication system as a logged on user.

Users may include registered members of the social network, guests to the social network and/or the interactive media player, performers participating in live media distribution, and/or administrators. A user may belong to more than one node of a social network. A user may create a node and/or be able to join nodes created by others. In some implementations, nodes may require invitations to join.

The interactive media player may exhibit any form of media and allow users to interact with each other, with subjects of the media, and/or administrators. Media may include but is not limited to video, audio, text, images, or combinations thereof. Media may be digital including, but not limited to, rich multimedia content such as audio and/or video and content such as text or formatted HTML documents.

The interactive media player and/or the website coupled to the interactive media player may be coupled to a memory that includes various media. Memory may include volatile or nonvolatile memory including without limitation, ROM, RAM, EEPROM, flash memory, optical memory, disk drives, and/or repositories. Memory may include a memory on a user's computer or libraries (*e.g.,* repositories) of media. Media may be streamed live *(e.g.,* real-time streams) or transferred from a media source (*e.g*., a memory of a computer coupled to the interactive media player or repositories). Media sources accessible by interactive media player may be controlled by an administrator, owner of a social network, affiliated third party servers, and/or users.

The interactive media player may be displayed in a portion of a website, embedded in a website, and/or in a pop up window. The interactive media player may be presented to an audience (*e.g*., users, guest users, administrators) on a wide range of digital devices including computer web browsers, personal computers, mobile devices (such as cell phones, smart phones, etc.) and portable devices (*e.g.,* personal digital assistants, etc.). In one implementation, various degrees of media display and control are allowed from different viewing devices. For example, a web user may be capable of posting and viewing video and text messages while a cell phone user may be capable of posting and viewing text messages during exhibition of media. As another example, cell phone users may view video but be restricted from positing live-streaming video.

One feature of the interactive media player may include an interactive platform for the audience (*e.g*., users) of exhibited media to interact with one another and/or with the subjects of the media, who may or may not be users. A user may be able to online text chat, online audio chat, online video chat, 3D or Virtual Reality interaction, participate in audience polling, and/or other extended interactivity with other users and/or subjects of the media being exhibited. The interactive platform may allow members of the audience to post text, audio, and/or video messages and/or interact in real-time with other audience members and/or subjects of the media.

As illustrated in FIGS. 1-2, users and/or administrators may access an interactive media player via one or more websites coupled to a social network. Users may access an interactive media player and/or a social network via one or more network protocols (*e.g*., TCP/IP, Bluetooth, WiFi, etc.). A user may access an interactive media player and/or a social network via the Internet.

One feature of the interactive media player may be the intertwining of the social network community (*e.g*., users, photos, message notification, online chatting, etc.) with the media exhibition experience. The interactive media player allows social network members (*e.g*., users registered with the social network) and guest users to view media from the network operator, administrator, affiliated media partners, and/or from other users. The media may be stored on a memory coupled to the website (*e.g*., a memory coupled to the domain host and/or a third party server) or streamed (*e.g*., from a live taping, from a concurrent broadcast on television, via a webcam/microphone or other user's computer device, etc.).

The interactive media player may allow interaction between users in the same social network, or node of the social network, between users on the same website, between users participating in the same media exhibition (*e.g*., viewing/listening to the same video), between users and subjects of the exhibition (*e.g*., between users and members of the band performing as the media exhibition), between users and administrators, between users and other components of the system. For example, the interactive media player may allow interaction between the user and subjects of the media being exhibited (*e.g*., band members, actors, etc.). In FIG. 1, User A and User B may be able to view the same or different media exhibitions and be able to interact with each other. In one implementation, User A and User B may only be able to interact with each other if they view the same media exhibition. As an example, User C may access a website that restricts interaction to logged on users, and thus, User A may not be able to interact with User C.

Over a social network, users may interact via chat, webcam conferencing, VOIP, mouse gestures, e-mail, instant messaging, or any other appropriate communication technique. Users may interact with individuals or segments of the community such as a single channel participant, an entire channel audience, and/or a collection of friends to the user or the whole network. These interactions may occur on an open channel, a private channel, or a moderated (or administered) channel. There are a variety of other ways that the interactive media player may be used by a social network, community of users, or participants.

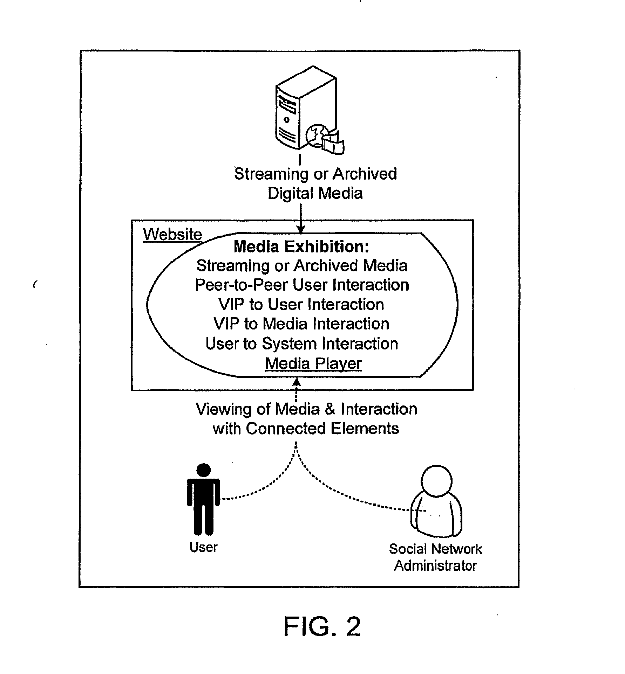

FIG. 2 is another illustration of a social network. One or more users may access a website of the social network that includes an interactive media player. Users may be members of a social network and/or a node of a social network and/or users that are not members of the social network (*e.g.,* guest users). A user may select (*e.g.,* from a menu, channels, titles, stations, etc.) and/or request media to be exhibited on the interactive media player on the website. Users may vote on which media should be exhibited and/or in which order different media should be displayed. The interactive media player and/or the website may include a graphical interface coupled to the system that allows users to vote.

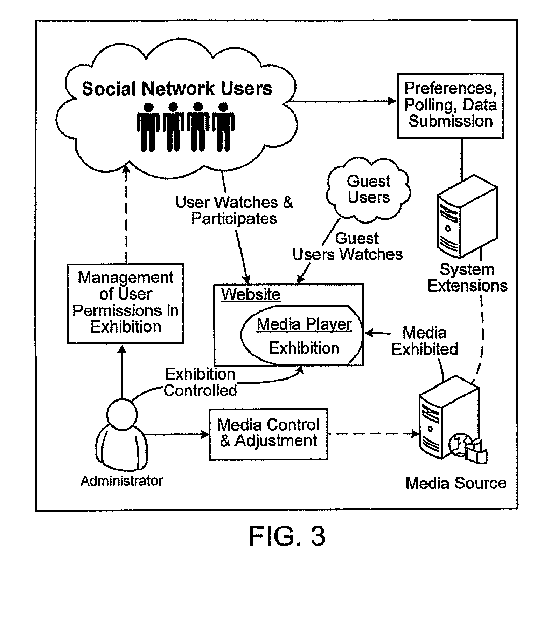

As illustrated in FIG. 3, the exhibited media may be selected by an administrator. Social networks may include one or more administrators. An administrator may have access to and/or control over users' permissions and web content associated with a website and/or an interactive media player. For example, the administrator may control which social network node(s) that users may access and/or interact with other users on the social network system and/or interactive media player. An administrator may control which users may interact with each other on a website. The administrator may control the content of the website and/or the interactive media player on the website (*e.g*., what is included in a logged on user's view of the website).

An administrator or operator may control content displayed on interactive media player (*e.g*., time and/or audience). There are a variety of sources of media content ranging from pictures or picture slideshows, audio streams, webcam streams, VOIP, videos, HTML, presentation slides, stored media, etc. These sources may include libraries or users, and may be stored or real-time streams. In an open channel setup, each user may be their own administrator of their own channel in the network. In structured networks, individual nodes may each have an administrator(s) and a global network operator may have administrative rights across the network.

One feature of the interactive media player may include allowing the administrator to manage user permissions, the website, webpage(s), interactive media player(s), and/or specific media exhibitions of media. For example, if a video clip is rated R by a motion picture rating system or an audio clip has explicit language, an administrator may modify user permissions to the interactive media player and/or the website to inhibit users under a certain age from accessing the interactive media player. In one implementation, the blocked users may still be able to access the website but without the interactive media player or without permission to view specific exhibitions on the interactive media player.

The administrator may be able to control and adjust the media. For example, the administrator may adjust playback speed; delay times for live streaming media; brightness or contrast in images or video; whether advertisements may be played before, during, and/or after media exhibition; and/or whether a user can fast forward through advertisements. The administrator may monitor user voting and select and/or prioritize playback of media based on the voting.

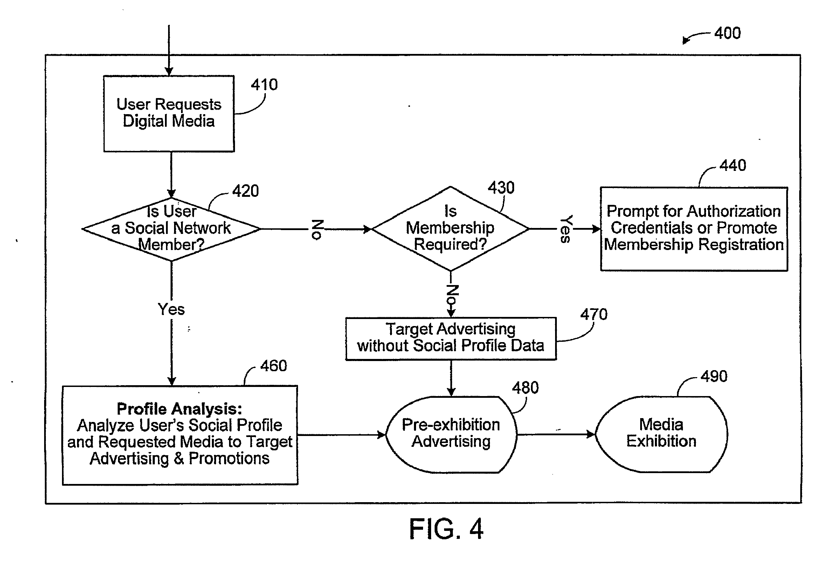

FIG. 4 illustrates a flowchart of an example of a process 400 by which a user accesses an interactive media player on a website. A user may access a website that includes an interactive media player. The website may be coupled to an authorization system that allows the user to log on to the website. In some implementations, the user may access more features of the interactive media player as a logged on user than as a guest.

The user may request access to a media exhibition, an interactive media player, and/or the website (operation 410). The system may determine if a user is a member of the social network (*e.g*., logged on to the authentication system) (operation 420). In an implementation, the system may allow the user to log on to the authentication system or register for membership in the social network. For example, a webpage may include an embedded portion that allows or prompts a user to log on to the authentication system. The webpage may include a pop-up, prompt, or a portion that promotes registration for membership in the social networking group.

If the user is not a member of the social network and/or logged on to the authentication system, then the system may then determine if the media exhibition that the user is attempting to access requires membership in the social network (*e.g*., requires a user to be logged on to the website) (operation 430). If membership is required, then a user may be presented with a prompt for authorization credentials or membership registration (operation 440). If the user is logged on to a centralize authentication system, then the user may view web pages as a logged in user without being requested for authorization credentials or a user ID (*e.g*., email address, username, password, or other user information). In an implementation, the website may exhibit media, but a user may not access at least a portion of interactive functionality of the interactive media player unless the user is a member of the social network (*e.g*., logged on to the authentication system). In other implementations, a user may be allowed to access interactive functionality of a specified media exhibition even if the user is not logged on to the authentication system.

Another feature of the present invention may be the insertion of targeted promotional material or advertising prior to, during, and/or after exhibition of media. The advertising may be targeted through analysis of the user's social network profile (operation 460) and demographic information stored on connecting systems, the authentication system, the user's history of media exhibitions viewed, and/or advertising may be targeted without social profile data (operation 470). Furthermore, targeted advertising may be clustered with other ads within the player which are visible during the entirety of the user's access of the interactive media player experience.

In one implementation, prior to the exhibition of the chosen media, the interactive media player may display advertisements (*e*.*g*., promotional materials or give-aways) (operation 480). Upon initialization of the media viewer, the interactive media player determines attributes (*e.g*., content, rating, subject matter, title, length, language, keywords in the media to be displayed, etc.) of the media to be displayed as well as attributes (*e.g*., user information such as age, gender, membership in various nodes of social network, hobbies, etc.) of the viewer watching the media. The interactive media player may then analyze the data to determine the most which promotional material to inject. For example, the interactive media player may determine that the media (*e.g*., a movie) mentions a brand of beer and then plays advertisement for the beer. As another example, the interactive media player may determine that a user is a male between 18-25 years old and play advertisement targeting the age group (*e.g*., sports tickets, sport ticket exchanges, movies, etc.). The analysis may be performed by a computer system within the social network infrastructure or by a partner system with access to the social network profiles and demographics.

In some implementations, adverting may be exhibited prior to exhibiting the media to users logged on to the authentication system and/or guests. Advertising may be exhibited during the media stream. For example, the exhibited media may be paused for advertising. The advertising may be exhibited on the same or different portion of the media player on which the media is being exhibited (operation 490) and/or on the webpage proximate the interactive media player.

In one implementation, during the exhibition of streaming media or lengthy archived media exhibits the interactive media player may inject targeted advertising into the media stream tailored to the current viewer. The advertising may be tied to the promotions which were displayed pre-exhibition or may be independent. Furthermore, the interactive media player may display targeted advertising in neighboring screen areas while the media is being exhibited or while the user is utilizing the interactive media player's interactive features.

The advertising exhibited to logged on users and/or guests may be the same or different. The advertising may be at least partially based on user information. For example, advertising may be targeted for each user participating in the exhibition. For example, a user who is a member of a hockey fan social networking node and listening to streaming sports radio may be displayed advertising for a television package that includes hockey games. A user who is a member of the bowling league social network node may be displayed advertisements for bowling shoes when logged into the authentication system. Advertising may also include advertising for joining other nodes of a social network, such as when members of a college football fan node are watching streaming video of past games, advertisements may include invitations to join college conference fan nodes, invitations to join college alumni nodes, advertisements for the college, and/or advertisements for ticket resale nodes. Advertising may not be based on user information, in certain implementations.

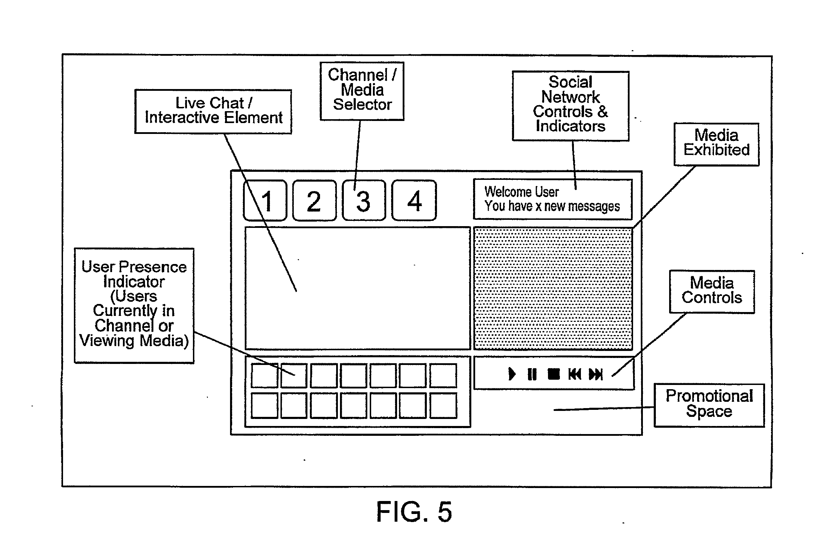

FIG. 5 is an illustration of an example of a screenshot of an interactive media player. The interactive media player may be an embedded portion of a webpage or a pop-up window. The interactive media player may include a viewing portion where media is exhibited. If media being exhibited is only an audio exhibition, then the viewing portion may display another image or video concurrently while the audio media is being exhibited. The interactive media player may include one or more media controls to adjust volume, playback, or playback speed. One feature of the interactive media player may include a promotional space for displaying advertisement, sponsors, the source of the media stream, etc.

The interactive media player may include a user indicator. The user indicator may include pictures, avatars, names, or other displays of user identity. The user indicator may indicate which users are logged on to the authentication system and observing the same media stream. The user indicator may include users that are not logged in. The interactive media player may include an interactive element, such as, for example, live chatting or posting text, video, audio clips, etc.

The interactive media player may allow interactive areas of the interactive media player to be segmented based on the media being exhibited, groups of media exhibited, or other factors (interest group, media station or channel identifier, and/or demographic division). Thus, the interactive media player may allow the social community and linked communities to interact with other users on segmented channels within the media experience. The interactive media player may include buttons that allow users to view different media being exhibited on the different segments of the interactive media player. For example, the interactive media player may include an interface that allows a user to "switch channels" similar to switching channels on a television or radio station. In some implementation, when a user switches to a different channel, the user presence indicator may be modified to show users viewing the exhibited media. In other implementations, the user presence indicator may display all users logged onto the website. The interactive media player may include social network controls and indicators such as, messages to the user from other users and/or the social network, log on status, and/or number or lists of other users that are also logged on that are members of a user controlled list (*e.g*., a list of friends).

Channels, media stations, content, and/or media being displayed may be controlled by an administrator or network operator. In some implementations, an open or free for all channel setup may be provided where users are able to serve their own media content or stream, as they deem appropriate (*e.g*., in a more free network setup). A channel may be controlled by an administrator or a user with administrator rights. A network operator may have the ability to modify content on the total network. The social network may be represented as a hierarchy where nodes are channels and media sources associated with them and administrators may be assigned to control nodes, grouped nodes, and/or branches of a hierarchy. Administrators may be assigned across network segments grouped other ways. Since channels exist in any number of ways on the network or community, administration of the channels may likewise be performed and/or assigned in any number of ways.

The interactive media player may allow users to watch a musical performance live and interact with members of the musical group and/or other viewers. In another implementation, a user may watch a movie and/or interact with director, producer, actors in the movie, and/or other viewers. The interactive media player may allow a user to transmit an image of himself/herself performing an activity (*e.g*., bowling, swinging a golf club, dancing, singing, etc.) and interact with experts or other users who may critique the user's performance. In one implementation, a user may listen to a radio station and interact with disc jockeys or other users. A user may watch music videos and interact with video jockeys or other users. Allowing users to interact with other members of the social network and view media concurrently, may promote the development and growth of the social network.

A director, a disc jockey, or a band may be an administrator for a channel either temporarily or permanently. Channel administrators may launch promotions, initiate surveys, take requests, play interactive games with the network users, or perform any number of interactions with the on-line community. A channel may include a normal administrator that controls the channel and works with director, disc jockey, or band being featured on the channel and operates like a mediator or a host of a talk show on the channel. The administrator may operate behind the scenes or be an active participant on the channel. The administrator may grant channel participants additional channel management and content interaction capabilities on a short term or a more permanent basis for a given channel.

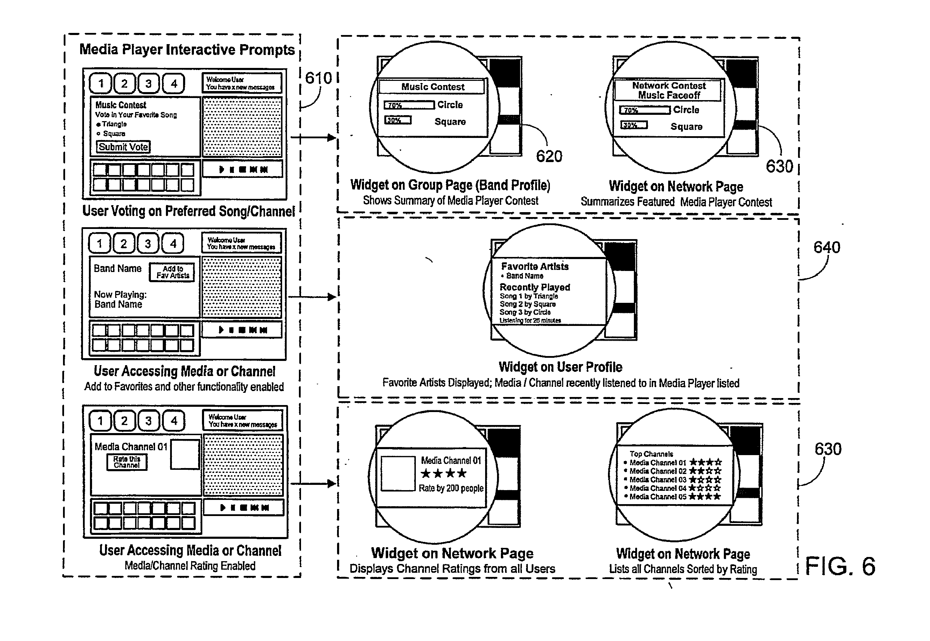

In some implementations, the actions of a user or the interactions between users or groups of users on a channel or collection of channels may trigger changes in the social network profile (*e.g*., data regarding activities of users and/or widgets, web pages, and/or websites associated with the user) of a network user, a network group (such as a band), or on a network page itself. FIG. 6 is an illustration of example interactive prompts on an interactive media player. These interactions affect the interactive media player. Interactions may affect profile pages, other pages on the network, or network 'widgets' (*e*.*g*., embedded portions of web pages) that may be embedded on the network or external web pages. For example, a channel 610 allows users to vote on channels, bands, and/or songs. The social network profile (*e*.*g*., widgets, web pages, and/or websites) of the band 620 may include a live representation of how their song is performing in the polls on the channel, if the contest is ongoing, or a summary of contest results, if the contest has ended. A widget or webpage 630 on the network (*e.g*., a group homepage, a radio station web page, etc.) may also include polling information (*e.g*., song, channel, or band preference).

A user who voted in the interaction media player may have a widget representation 640 of the contest on their social network profile page. The widget representation may include messages such as "I voted for this band and helped them win the channel contest." Web pages on the social network may include ongoing or historical contests and other interactive media player affected events. The web pages may include widgets that show the individual contests or any other type of widget that uses, computes, or analyzes the data stored in the system from interactions in the media player.

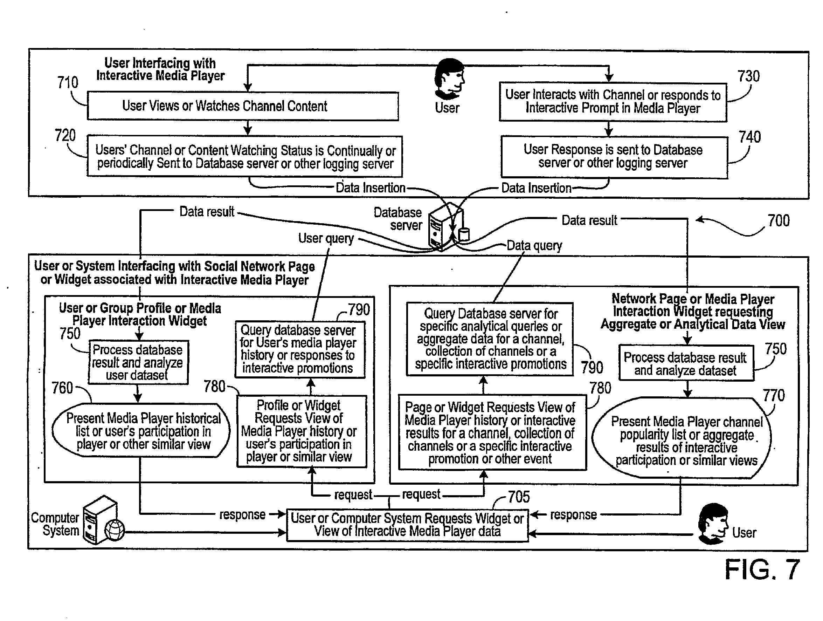

FIG. 7 is an illustration an example process for interacting with the interactive media player. A user may access and interact with the interactive media player stored in a social networking system (operation 705). The interactive media player may also retrieve, aggregate, process, analyze and/or display media by any variety of widgets and pages on the social network. As the user views content in the interactive media player, or remains active in a channel or set of channels (operation 710), the activity data (*e.g*., content watch, time spent on site, time spent viewing specific media, number of times media emailed to other users or watched, etc.) of the user is sent to a database server or other logging server of the system (operation 720).

Additionally, the user may be presented with an interactive prompt which corresponds to the media currently being exhibited or a choice of preferred media or channels or any number of other interactive media player related questions (operation 730). User responses or other inputs may then be sent to the database server or other logging server (operation 740).

In some implementations, the data from media player activity and user interactive prompt responses may be summarized and analyzed (operation 750) to enhance pages on the social network or to create widgets which may be embedded on the network or on external sites. These widget components may use the data to create ordered lists of media or channels, to generate graphs of media or channel popularity or other statistics, and/or to display the results of an individual user's media consumption over time and/or a specific interactive promotional event conducted within the interactive media player. Other similar reports and informative graphical or textual summaries of the data analysis may be generated. For example, a user is presented with user participation or a historical list of views (operation 760). As another example, the user may also be presented with a channel popularity list or aggregate results of interactive participation (operation 770). In some implementations, the interactive media player history and/or interactive results may be retrieved and/or analyzed (operation 780).

The data may be queried in a granular fashion (*e*.*g*., a single user's media player data) or may be aggregated (*e*.*g*., by date, channel, collection of channels, social networking network, given node within the social network, and/or by any other detail which the system may utilize) (operation 790).

The widgets in the described implementation and other similar views of interactive media player activity and data may be requested by social network visitors (*e*.*g*., using any type of computer) or may be requested by other information systems. The social network may set up a services server which may provide detailed interactive media player data reports and reports may be tailored by authentication credentials and other constraints. Some widgets and services may be available to all types of computer clients and some may only be available to other servers or clients authorized to access the social network system.

Although a user has been described as a human, a user may be a person, a group of people, a person or persons interacting with one or more computers, and/or a computer system, as appropriate.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementations in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the term "machine-readable medium" refers to any computer program product, apparatus and/or device (*e.g*., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer (*e.g*., host or external host) having a display device (*e*.*g*., a CRT (cathode ray tube) or LCD (liquid crystal display) monitor) for displaying information to the user and a keyboard and a pointing device (*e*.*g*., a mouse or a trackball) by which the user can provide input to the computer. Other kinds of devices can be used to interact with a user as well. For example, feedback provided to the user by an output device may be any form of sensory feedback (*e.g*., visual feedback, auditory feedback, and/or tactile feedback) and/or input from the user may be received in any form, including acoustic, speech, or tactile input.

The systems and techniques described here can be implemented in a computing system that includes a back end component (*e.g*., as a data server), a middleware component (*e.g*., an application server), a front end component (*e.g*., a client computer with a graphical user interface or a Web browser through which a user can interact with an implementation of the systems and techniques described here), or any combination of such back end, middleware, or front end components. The components of the system can be interconnected by any form or medium of digital data communication (*e*.*g*., a communication network). Examples of communication networks include a local area network ("LAN"), a wide area network ("WAN"), and the Internet.

The computing system may include clients and servers. A client and a server are generally remote from each other and typically interact through a communication network. The relationship of client and server arises by virtue of computer programs running on the respective computers and having a client-server relationship to each other.

Several implementations for the interactive media player have been described, and a number of others have been mentioned or suggested. Nevertheless, it will be understood that various modifications may be made. For example, the preceding flowcharts and accompanying description illustrate exemplary processes such as 400 and 700. Systems (*e.g*., illustrated in FIG. 1, 2, 3, 5, and 6) contemplate using or implementing any suitable technique for performing these and other tasks. It will be understood that these methods are for illustration purposes only and that the described or similar techniques may be performed at any appropriate time, including concurrently, individually, or in combination. In addition, many of the steps in these flowcharts may take place simultaneously and/or in different orders than as shown. Moreover, the systems may use methods with additional steps, fewer steps, and/or different steps, so long as the methods remain appropriate. Accordingly, other implementations are within the scope of this application.

It is to be understood the invention is not limited to particular systems or processes described which may, of course, vary. It is also to be understood that the terminology used herein is for the purpose of describing particular embodiments only, and is not intended to be limiting. As used in this specification, the singular forms "a", "an" and "the" include plural referents unless the content clearly indicates otherwise. Thus, for example, reference to "a memory" includes a combination of two or more memories and reference to "a media" includes mixtures of different types of media.

Although the present invention is defined in the attached claims, it is to be understood that the invention can alternatively also be defined in accordance with the following embodiments:

### EMBODIMENTS:

1. A method for social networking comprising:
   receiving a request from a user for access to a first website coupled to the social network;
   receiving a request from the user for access to a media exhibition on an interactive media player on the first website;
   presenting the media to the user on the interactive media player; and
   allowing the user to interact on the interactive media player with other users.
2. The method of embodiment 1, wherein the first website is coupled to an authentication system, and further comprising:
   automatically determining whether a user is logged on to the authentication system.
3. The method of embodiment 2, wherein the media is presented to the user, if the user is logged on to the authentication system.
4. The method of embodiment 2, wherein the user is allowed to interact with the other users, if the user is logged on to the authentication system.
5. The method of embodiment 2, wherein the media is presented to the user, if the user is not logged on to the authentication system.
6. The method of embodiment 2, wherein in the user is inhibited from interacting with other users, if the user is not logged on to the authentication system.
7. The method of embodiment 1, wherein the interactive media player includes more than one channel, wherein different media is exhibited on different channels, and wherein presenting the media to the user comprises presenting the media to the user on a first channel of the interactive media player.
8. The method of embodiment 7, wherein the user is allowed to interact on the interactive media player with other users on the first channel.
9. The method of embodiment 7, wherein the user is inhibited from interacting with users viewing different media on different channels.
10. The method of embodiment 7, wherein the user is allowed to interact on the interactive media player with users on the first channel and with users on at least one other channel.
11. The method of embodiment 1 further comprising displaying one or more advertisements on the interactive media player based on at least one of one or more attributes of the user or one or more attributes of the media being presented on the interactive media player.
12. Software comprising computer-readable instructions to perform operations comprising:
   allowing a user to access a website coupled to a social network;
   presenting media on an interactive media player on the first website;
   allowing a user to access one or more interactive features on the interactive media player.
13. The software of embodiment 12 wherein the instructions to perform operations further comprise presenting one or more messages on the interactive media player.
14. The software of embodiment 12 wherein the instructions to perform operations further comprise determining if a user is logged on to the website by determining if the user if logged on to an authentication system coupled to the first website, wherein the authentication system is coupled to at least a first website on a domain and a second website coupled to a different domain.
15. The software of embodiment 12 wherein the instructions to perform operations further comprises receiving a request from a user to change media exhibited on the interactive media player, and presenting a different media on the interactive media player in response to the request from the user.
16. The software of embodiment 12 wherein the instructions to perform operations further comprises displaying one or more advertisements on the interactive media player.
17. The software of embodiment 12 wherein the instructions to perform operations further comprises displaying one or more advertisements on the interactive media player based on one or more attributes of the user.
18. The software of embodiment 12 wherein the instructions to perform operations further comprises displaying one or more advertisements on the interactive media player based on one or more attributes of the media being presented on the interactive media player.
19. A system for providing an interactive media player on a social network comprising:
   a processor; and
   a memory coupled to the processor, wherein the memory stores program instructions operable to:
      receiving a request from a user for access to a first website coupled to the social network;
      receiving a request from the user for access to a media exhibition on an interactive media player on the first website;
      presenting the media to the user on the interactive media player; and
      allowing the user to interact on the interactive media player with other users.
20. The system of embodiment 19 wherein the media comprises at least one of video, text, or audio.

A number of implementations have been described. Nevertheless, it will be understood that various modifications may be made without departing from the spirit and scope of the following claims. Accordingly, other implementations are within the scope of the following claims:

## Claims

1. A method for social networking comprising:
receiving a request from a user for access to a first website coupled to the social network;
receiving a request from the user for access to a media exhibition on an interactive media player on the first website;
presenting the media to the user on the interactive media player; and
allowing the user to interact on the interactive media player with other users.

2. The method for social networking of claim 1, wherein allowing the user to interact on the media player with other users comprises displaying a user identity.

3. The method of claims 1 or 2, wherein the interactive media player comprises at least one of: a log on status of the user, a list of one or more other users that are also logged on that are members of a user controlled list, social network indicators, social network controls, messages to the user from other users, and messages to the user from the social network.

4. The method of claims 1 or 2, wherein the interactive media player comprises at least one of: a log on status of the user, a list of one or more other users that are also logged on that are friends of the user on the social network, social network indicators, social network controls, messages to the user from other users, and messages to the user from the social network.

5. The method of claims 1-4, further comprising triggering changes in the social network profile of the user in response to the interactions of the user with other users.

6. The method of claims 1-5, wherein what is included in a logged on user's view of the first website is based on permissions of the user.

7. Software comprising computer-readable instructions to perform operations comprising:
allowing a user to access a website coupled to a social network;
presenting media on an interactive media player on the first website;
allowing the user to access one or more interactive features on the interactive media player.

8. The software comprising computer-readable instructions to perform operations of claim 7, further comprising allowing the user interact on the interactive media player with other users.

9. The software comprising computer-readable instructions to perform operations of claims 7 or 8, wherein the interactive features on the interactive media player comprise at least one of: a user identity, a log on status of the user, a list of one or more other users that are also logged on that are members of a user controlled list, social network indicators, social network controls, messages to the user from other users, and messages to the user from the social network.

10. The software comprising computer-readable instructions to perform operations of claims 7 or 8, wherein the interactive features on the interactive media player comprise at least one of: a user identity, a log on status of the user, a list of one or more other users that are also logged on that are friends of the user on the social network, social network indicators, social network controls, messages to the user from other users, and messages to the user from the social network.

11. The software comprising computer-readable instructions to perform operations of claims 8-10, wherein allowing the user to interact on the interactive media player with other users further comprises triggering changes in the social network profile of the user in response to the interactions of the user with other users.

12. A system for providing an interactive media player on a social network comprising:
a processor; and
a memory coupled to the processor, wherein the memory stores program instructions operable to:
receiving a request from a user for access to a first website coupled to the social network;
receiving a request from the user for access to a media exhibition on an interactive media player on the first website;
presenting the media to the user on the interactive media player; and
allowing the user to interact on the interactive media player with other users.

13. The system of claim 12 wherein the media comprises at least one of video, text, or audio.

14. The system of claims 12 or 13, wherein allowing the user to interact on the interactive media player with other users comprises displaying a user identity and wherein the interactive media player comprises at least one of: a list of one or more other users that are members of a list controlled by the user, social network indicators, social network controls, messages to the user from other users, and messages to the user from the social network.

15. The system of claims 12-14, wherein the program instructions are further operable to triggering changes in the social network profile of the user in response to the interactions of the user with other users.
